# EUROPEAN PATENT SPECIFICATION

(11) **EP 2 911 372 B1**
(45) Date of publication and mention of the grant of the patent: **28.03.2018**
(21) Application number: 13854778.1
(22) Date of filing: 15.08.2013
(51) Int. Cl.: H04M 1/02, H01R 13/453, H01R 13/52

(54) **WATERPROOF ASSEMBLY AND CELLULAR PHONE**
WASSERDICHTE ANORDNUNG UND MOBILTELEFON
ENSEMBLE IMPERMÉABLE À L'EAU ET TÉLÉPHONE CELLULAIRE

(30) Priority: 19.11.2012 CN 201220612843 U
(43) Date of publication of application: 26.08.2015
(73) Proprietor: ZTE Corporation, Shenzhen, Guangdong 518057 (CN)
(72) Inventor: GU, Haibing, Shenzhen Guangdong 518057 (CN); WANG, Lijun, Shenzhen Guangdong 518057 (CN)
(74) Representative: J A Kemp
(86) International application number: PCT/CN2013/081579
(87) International publication number: WO 2014/075474

(56) References cited:
- CN-A- 102 751 123
- CN-U- 202 979 049
- CN-Y- 201 262 906
- DE-U1- 8 625 124
- JP-A- 2011 165 319
- US-A- 1 060 011
- US-A1- 2009 093 152
- US-B1- 8 096 819

## Description

### TECHNICAL FIELD

The disclosure relates to the field of waterproof technology, and in particular to a waterproof assembly and a cellular phone.

### BACKGROUND

Waterproof cellular phone becomes more and more popular for its unique properties, and a growing number of waterproof cellular phones are available on the market. At present, for most waterproof cellular phones available on the market, the waterproof function of side wall openings (such as USB interface, ear phone interface and the like) is generally realized by sleeving a silicone ring on a waterproof plug or by double-shot moulding of the waterproof plug, that is, through the interference fit between the silicone and the shell. However, this processing way has a higher requirement on the manufacturing and assembling of plugs or silicone rings, and consequently results in a low yield rate of components, a low yield rate of complete machines and a high production cost.

Document US 2009/0093152 A1 provides a universal serial bus connector assembly for sealing a plug against the intrusion of foreign material. The connector assembly includes a plug receptacle housing and a plug receptacle supporting structure attached to the plug receptacle housing. A bezel is fitted over the plug receptacle supporing structure. A sealing elastomeric membrane is positioned between the plug receptacle supporting structure and the bezel.

Document US 8 096 819 B1 proposes a protective cover and electric outlet arrangement, wherein a non-specific design protective cover coupled to the outlet body and bendable to frictionally engage and expand open an access way to the insertion holes of the electrical plug.

Document DE 86 25 124 U1 discloses an electrical contact device, in which a flexible part is bended when a plug is inserted.

Document US 1 060 011 A proposes a flush receptacle, whereby the plug therein may be withdrawn and the aperture for the plug may be automatically closed.

### SUMMARY

The disclosure mainly aims at providing a waterproof assembly, to improve the yield of cellular phones and reduce the production cost of cellular phones.

To achieve the above aim, the disclosure provides a waterproof assembly, which includes a shell and a waterproof plug, wherein the shell is provided with an opening; the bottom of the opening is recessed inwardly to form an accommodation part; the bottom of the opening is also provided with an elastic film; and the elastic film is provided with a hole. The waterproof plug includes a sealing part for being inserted into the accommodation part; the diameter of the sealing part is greater than the diameter of the hole; when the waterproof plug is inserted into the opening, the sealing part is located inside the accommodation part, and the elastic film adheres to the outer wall of the sealing part, a side wall of the accommodation part is provided with a limit part, and when the waterproof plug is inserted into the accommodation part, the elastic film adheres to the limit part. Preferably, the elastic film includes a fixed part which is fixedly connected with the bottom of the opening and an extended part which faces the accommodation part; one side of the extended part facing the accommodation part extends vertically to form a protruded ridge.

Preferably, waterproof back gum is provided between the fixed part and the bottom of the opening to adhere the elastic film to the bottom of the opening. According to the invention the side wall of the accommodation part is provided with a limit part; when the waterproof plug is inserted into the accommodation part, the elastic film adheres to the limit part.

Preferably, the limit part is flexible glue.

Preferably, the elastic film is a rubber film.

The disclosure also provides a cellular phone, which includes a waterproof assembly; the waterproof assembly includes a shell and a waterproof plug, wherein the shell is provided with an opening; the bottom of the opening is recessed inwardly to form an accommodation part; the bottom of the opening is also provided with an elastic film; and the elastic film is provided with a hole; the waterproof plug includes a sealing part for being inserted into the accommodation part; the diameter of the sealing part is greater than the diameter of the hole; when the waterproof plug is inserted into the opening, the sealing part is located inside the accommodation part, and the elastic film adheres to the outer wall of the sealing part, a side wall of the accommodation part is provided with a limit part, and when the waterproof plug is inserted into the accommodation part, the elastic film adheres to the limit part. In the disclosure, as an elastic film is provided at the bottom of the opening of the shell and a hole is provided on the elastic film, when the waterproof plug is inserted into the accommodation part, the elastic film is sleeved on the outer wall of the sealing part, then the elastic film generates elastic deformation and can be tightly adhered to the outer wall of the sealing part to achieve the waterproof effect. The waterproof assembly provided by the disclosure is convenient to assemble, can improve the yield of cellular phones and reduce the production cost of cellular phones.

### BRIEF DESCRIPTION OF THE DRAWINGS

Fig. 1 shows a structure diagram of a shell and a waterproof plug before assembling according to one embodiment of the waterproof assembly of the disclosure;
Fig. 2 shows a structure diagram of a shell and a waterproof plug after assembling according to one embodiment of the waterproof assembly of the disclosure;
Fig. 3 shows a structure diagram of a shell and a waterproof plug before assembling according to another embodiment of the waterproof assembly of the disclosure; and
Fig. 4 shows a structure diagram of a shell and a waterproof plug before assembling according to a third embodiment of the waterproof assembly of the disclosure.

The implementation, functions and advantages of the disclosure are further illustrated in conjunction with following embodiments by reference to accompanying drawings.

### DETAILED DESCRIPTION

It should be understood that specific embodiments described hereinafter are only to illustrate the disclosure but to limit the disclosure.

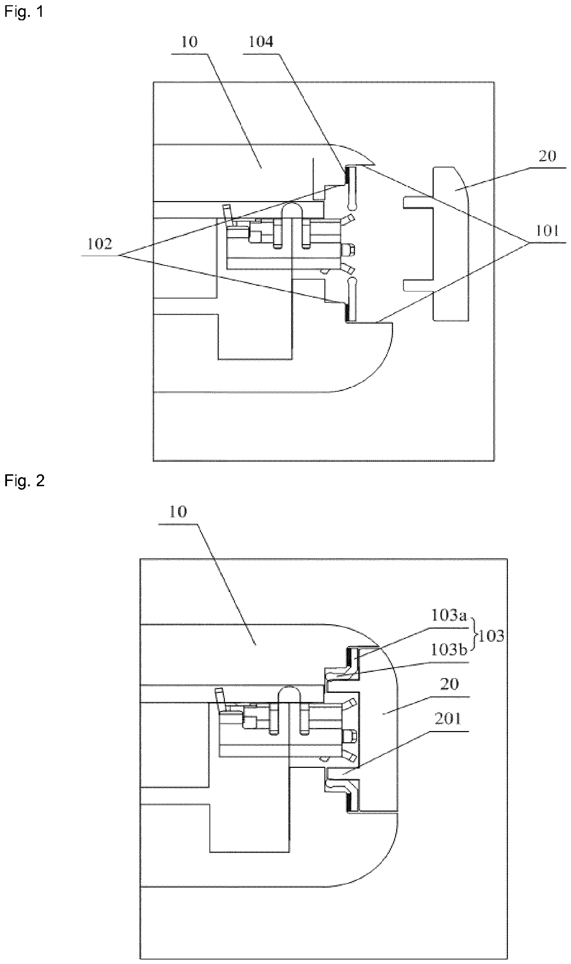

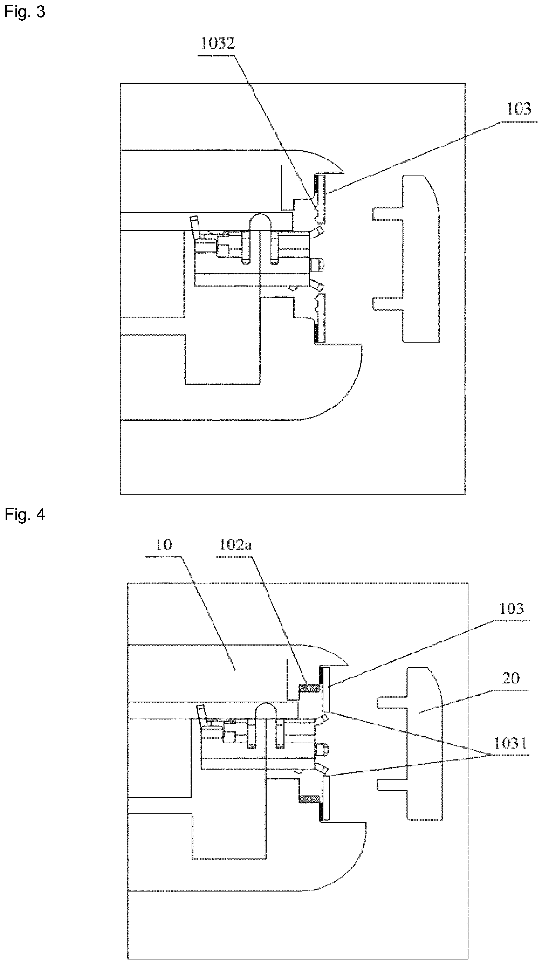

Referring to Fig. 1 to Fig. 4, Fig. 1 shows a structure diagram of a shell and a waterproof plug before assembling according to one embodiment of the waterproof assembly of the disclosure; Fig. 2 shows a structure diagram of a shell and a waterproof plug after assembling according to one embodiment of the waterproof assembly of the disclosure; Fig. 3 shows a structure diagram of a shell and a waterproof plug before assembling according to another embodiment of the waterproof assembly of the disclosure; Fig. 4 shows a structure diagram of a shell and a waterproof plug before assembling according to a third embodiment of the waterproof assembly of the disclosure. The waterproof assembly provided by the disclosure includes a shell 10 and a waterproof plug 20, wherein the shell 10 is provided with an opening 101, the bottom of the opening 101 is recessed inwardly to form an accommodation part 102, the bottom of the opening 101 is also provided with an elastic film 103, and the elastic film 103 is provided with a hole 1031; the waterproof plug 20 includes a sealing part 201 for being inserted into the accommodation part 102, the diameter of the sealing part 201 is greater than the diameter of the hole 1031; and when the waterproof plug 20 is inserted into the opening 101, the sealing part 201 is located inside the accommodation part 102, and the elastic film 103 adheres to the outer wall of the sealing part 201.

In this embodiment, the hole 1031 is arranged to face the waterproof plug 20 and is located above the accommodation part 102. During the process of inserting the waterproof plug 20 into the opening 101, the waterproof plug 20 first contacts the elastic film 103; since the diameter of the sealing part 201 is greater than that of the hole 1031, during the process of inserting the sealing part 201 into the accommodation part 102 the sealing part 201 extrudes the elastic film 103 so that the elastic film 103 generates elastic deformation and then is sleeved on the sealing part 201. At this time, the elastic film 103 can tightly adhere to the sealing part 201 under the action of elasticity recovery, therefore water can be prevented from entering into the shell 10 via the opening 101 and waterproof effect is achieved.

In the disclosure, since an elastic film 103 is provided at the bottom of the opening 101 of the shell 10 and a hole 1031 is provided on the elastic film 103, when the waterproof plug 20 is inserted into the accommodation part 102, the elastic film 103 is sleeved on the outer wall of the sealing part 201, generates elastic deformation and then tightly adheres to the outer wall of the sealing part 201, to achieve the waterproof effect. The waterproof assembly provided by the disclosure is convenient to mount, can improve the yield rate of cellular phones and reduce the production cost of cellular phones.

It should be understood that the elastic film 103 can be any waterproof material having elasticity; the elastic film 103 in this embodiment is preferably a rubber film.

Preferably, the elastic film 103 includes a fixed part 103a which is fixedly connected with the bottom of the opening 101 and an extended part 103b which faces the accommodation part 102, wherein one side of the extended part 103b facing the accommodation part 102 extends vertically to form a protruded ridge 1032.

In this embodiment, when the waterproof plug 20 is inserted into the accommodation part 102, the width of the gap between the elastic film 103 and the accommodation part 102 is equal to the extending height of the protruded ridge 1032. When the waterproof plug 20 is inserted into the accommodation part 102, the protruded ridge 1032 and the side wall of the accommodation part 102 forms an interference connection, which further improves the waterproof performance of the elastic film 103.

Specifically, in another embodiment, the side wall of the accommodation part 102 is provided with a limit part 102a; when the waterproof plug 20 is inserted into the accommodation part 102, the elastic film 103 adheres to the limit part 102a.

In this embodiment, when the waterproof plug 20 is inserted into the accommodation part 102, the width of the gap between the elastic film 103 and the side wall of the accommodation part 102 is equal to the thickness of the limit part 102a. It should be noted that in this embodiment the limit part 102a is flexible glue. The side wall of the accommodation part 102 can be provided with a layer of flexible glue through a double-shot moulding technology. When the waterproof plug 20 is inserted into the accommodation part 102, the extended part 103b would extrude the flexible glue so that the flexible glue can generate elastic deformation and interference fit can be achieved between the extended part 103b and the flexible glue, thereby improving the waterproof performance of the elastic film 103.

It should be understood that the fixed part 103a of the elastic film 103 can be fixed at the bottom of the opening 101 by several ways, for example, sticking through waterproof back gum or by the double-shot moulding technology. In this embodiment, the fixed part 103a of the elastic film 103 is fixed at the bottom of the opening 101 through waterproof back gum. Specifically, waterproof back gum 104 for sticking the elastic film 103 to the bottom of the opening 101 can be provided between the fixed part 103a of the elastic film 103 and the bottom of the opening 101. In this embodiment, a layer of waterproof back gum 104 can be evenly coated on the bottom of the opening 101 and the elastic film 103 can be pressed on the waterproof back gum 104, so that the elastic film 103 can be stuck to the bottom of the opening 101 and the waterproof back gum 104 can seal the gap between the elastic film 103 and the opening 101, thereby achieving the waterproof effect.

The disclosure also provides a cellular phone, which includes a waterproof assembly. The structure of the waterproof assembly can be referred to that described in the above embodiments, and no further description is needed here. Of course, since the cellular phone in the embodiment adopts the waterproof assembly technology described in the above embodiment, the cellular phone has the advantages possessed by the waterproof assembly.

It should be noted that the waterproof assembly can be applied to cellular phones in this embodiment, and can be applied to other products (such as MP4, MP5 and so on) in other embodiments.

## Claims

1. A waterproof assembly,
comprising a shell (10) and a waterproof plug (20), wherein the shell (10) is provided with an opening (101), a bottom of the opening (101) is recessed inwardly to form an accommodation part (102), the bottom of the opening (101) is also provided with an elastic film (103), and the elastic film (103) is provided with a hole (1031); the waterproof plug (20) includes a sealing part (201) for being inserted into the accommodation part (102), a diameter of the sealing part (201) is greater than a diameter of the hole (1031); when the waterproof plug (20) is inserted into the opening (101), the sealing part (201) is located inside the accommodation part (102), and the elastic film (103) adheres to an outer wall of the sealing part (201),
**characterized in that** a side wall of the accommodation part (102) is provided with a limit part (102a), and when the waterproof plug (20) is inserted into the accommodation part (102), the elastic film (103) adheres to the limit part (102a).

2. The waterproof assembly according to claim 1, wherein the elastic film (103) comprises a fixed part (103a) which is fixedly connected with the bottom of the opening (101) and an extended part (103b) which faces the accommodation part (102); one side of the extended part (103b) facing the accommodation part (102) extends vertically to form a protruded ridge (1032).

3. The waterproof assembly according to claim 2, wherein waterproof back gum is provided between the fixed part (103a) and the bottom of the opening (101) to adhere the elastic film (103) to the bottom of the opening (101).

4. The waterproof assembly according to claim 1, wherein the limit part (102a) is flexible glue.

5. The waterproof assembly according to any one of claims 1 to 4, wherein the elastic film (103) is a rubber film.

6. A cellular phone, **characterized by** comprising the waterproof assembly described in any one of claims 1 to 5.

## Patentansprüche

1. Wasserdichte Anordnung,
umfassend eine Schale (10) und einen wasserdichten Stecker (20), wobei die Schale (10) mit einer Öffnung (101) bereitgestellt ist, ein Boden der Öffnung (101) nach innen vertieft ist, um ein Aufnahmeteil (102) zu bilden, der Boden der Öffnung (101) außerdem mit einer elastischen Schicht (103) bereitgestellt ist und die elastische Schicht (103) mit einem Loch (1031) bereitgestellt ist; der wasserdichte Stecker (20) ein Dichtungsteil (201) zum Einführen in das Aufnahmeteil (102) umfasst, ein Durchmesser des Dichtungsteils (201) größer ist als ein Durchmesser des Lochs (1031); wenn der wasserdichte Stecker (20) in die Öffnung (101) eingeführt wird, der Dichtungsteil (201) in dem Aufnahmeteil (102) platziert wird und die elastische Schicht (103) an einer Außenwand des Dichtungsteils (201) anhaftet,
**dadurch gekennzeichnet, dass** eine Seitenwand des Aufnahmeteils (102) mit einem Grenzteil (102a) bereitgestellt ist und dass, wenn der wasserdichte Stecker (20) in das Aufnahmeteil (102) eingeführt wird, die elastische Schicht (103) an dem Grenzteil (102a) anhaftet.

2. Wasserdichte Anordnung nach Anspruch 1, wobei die elastische Schicht (103) ein festes Teil (103a), das fest mit dem Boden der Öffnung (101) verbunden ist, und ein erweitertes Teil (103b) umfasst, das dem Aufnahmeteil (102) zugewandt ist; wobei sich eine Seite des erweiterten Teils (103b), das dem Aufnahmeteil (102) zugewandt ist, vertikal erstreckt, um eine hervorstehende Rippe (1032) zu bilden.

3. Wasserdichte Anordnung nach Anspruch 2, wobei wasserdichter Zurückgummi zwischen dem festen Teil (103a) und dem Boden der Öffnung (101) bereitgestellt ist, um die elastische Schicht (103) an dem Boden der Öffnung (101) anzuhaften.

4. Wasserdichte Anordnung nach Anspruch 1, wobei das Grenzteil (102a) flexibler Klebstoff ist.

5. Wasserdichte Anordnung nach einem der Ansprüche 1 bis 4, wobei die elastische Schicht (103) eine Gummischicht ist.

6. Mobiltelefon, **gekennzeichnet durch** das Umfassen der in einem der Ansprüche 1 bis 5 beschriebenen wasserdichten Anordnung.

## Revendications

1. Ensemble imperméable à l'eau,
comprenant une coque (10) et un bouchon imperméable à l'eau (20), la coque (10) étant dotée d'une ouverture (101), une partie inférieure de l'ouverture (101) étant renfoncée vers l'intérieur pour former une partie de réception (102), la partie inférieure de l'ouverture (101) étant également dotée d'un film élastique (103), et le film élastique (103) étant doté d'un trou (1031) ; le bouchon imperméable à l'eau (20) comprenant une partie de scellement étanche (201) pour être insérée dans la partie de réception (102), un diamètre de la partie de scellement étanche (201) étant supérieur à un diamètre du trou (1031) ; lorsque le bouchon imperméable à l'eau (20) est inséré dans l'ouverture (101), la partie de scellement étanche (201) est située à l'intérieur de la partie de réception (102) et le film élastique (103) colle à une paroi externe de la partie de scellement étanche (201),
**caractérisé en ce qu'**une paroi latérale de la partie de réception (102) est dotée d'une partie de limitation (102a), et lorsque le bouchon imperméable à l'eau (20) est inséré dans la partie de réception (102), le film élastique (103) colle à la partie de limitation (102a).

2. Ensemble imperméable à l'eau selon la revendication 1, dans lequel le film élastique (103) comprend une partie fixe (103a) qui est reliée de manière fixe à la partie inférieure de l'ouverture (101) et une partie étendue (103b) qui est face à la partie de réception (102) ; un côté de la partie étendue (103b) faisant face à la partie de réception (102) s'étend verticalement pour former une nervure saillante (1032).

3. Ensemble imperméable à l'eau selon la revendication 2, dans lequel une gomme arrière imperméable à l'eau est disposée entre la partie fixe (103a) et la partie inférieure de l'ouverture (101) pour coller le film élastique (103) à la partie inférieure de l'ouverture (101).

4. Ensemble imperméable à l'eau selon la revendication 1, dans lequel la partie de limitation (102a) est de la colle souple.

5. Ensemble imperméable à l'eau selon l'une quelconque des revendications 1 à 4, dans lequel le film élastique (103) est un film de caoutchouc.

6. Téléphone cellulaire, **caractérisé en ce qu'**il comprend l'ensemble imperméable à l'eau décrit dans l'une quelconque des revendications 1 à 5.
